Europäisches Patentamt

European Patent Office

Office européen des brevets

(11) Veröffentlichungsnummer: **0 297 631 B1**

# EUROPÄISCHE PATENTSCHRIFT

(45) Veröffentlichungstag der Patentschrift: **01.07.92**

(51) Int. Cl.5: **H02G 1/08**

(21) Anmeldenummer: **88200549.9**

(22) Anmeldetag: **16.03.88**

Verbunden mit 88902467.5/0357617
(europäische
Anmeldenummer/Veröffentlichungsnummer)
durch Entscheidung vom 18.03.91.

(54) **Vorrichtung zum nachträglichen Einziehen von Kabeln in Kabelschutzrohre.**

(30) Priorität: **18.03.87 DE 8704051 U**

(43) Veröffentlichungstag der Anmeldung:
**04.01.89 Patentblatt 89/01**

(45) Bekanntmachung des Hinweises auf die
Patenterteilung:
**01.07.92 Patentblatt 92/27**

(84) Benannte Vertragsstaaten:
**AT BE CH DE ES FR GB GR IT LI LU NL SE**

(56) Entgegenhaltungen:
**DE-A- 3 217 401**
**DE-C- 3 427 788**
**DE-U- 8 704 051**

(73) Patentinhaber: **KUMPF, Ursula**
**Steinbruchweg 5**
**W-7415 Wannweil(DE)**

(72) Erfinder: **Kumpf, Erich**
**Im Köpfen 14**
**W-7300 Esslingen(DE)**

(74) Vertreter: **Dreiss, Hosenthien & Fuhlendorf**
**Gerokstrasse 6**
**W-7000 Stuttgart 1(DE)**

**Beschreibung**

Die vorliegende Erfindung bezieht sich auf eine Vorrichtung zum nachträglichen Einziehen von Kabeln in Kabelschutzrohre, die bereits mit mindestens einem Kabel bestückt sind, nach dem Oberbegriff des Anspruches 1.

Bei einer derartigen aus der DE-PS 34 27 788 bekannten Vorrichtung ist der Mittenbereich des Zwischenbodens an seinen beiden Flächen glatt ausgebildet, besitzt also längs seines Querschnittes eine einheitliche Dicke. Im praktischen Einsatz hat sich gezeigt, daß sich bei größer werdender Reibungskraft zwischen dem sich im Kabelschutzrohr befindenden vorderen Bereich des Zwischenbodens und der Innenwandung des Kabelschutzrohres bzw. dem bereits verlegten Kabel der nachschiebende Bereich des Zwischenbodens unter dem damit größer werdenden Schub im Kabelschutzrohr buckelartig aufstellt, welcher Buckel sich nach einer weiteren Erhöhung des Schubes bis zum vorderen Ende des Zwischenbodens hin fortpflanzt, worauf sich wiederum ein Buckel bildet, der sich wieder fortpflanzt, usw. Dieses buckelartige Aufstellen, das von einer für diese Fälle nicht ausreichenden Eigensteifigkeit des Zwischenbodens herrührt, hat jedoch den Nachteil, daß erstens nicht stetig eingeschoben werden kann und daß zweitens damit die Reibung zwischen Zwischenboden und Kabelschutzrohr bzw. innenliegendem Kabel weiter erhöht wird. Es hat sich also gezeigt, daß es gilt, sowohl die Reibung zwischen Zwischenboden und Innenwandung des Kabelschutzrohres als auch zwischen dem Zwischenboden und dem innliegenden Kabel weiter zu verringern.

Aufgabe der vorliegenden Erfindung ist es, eine Vorrichtung zum nachträglichen Einziehen von Kabeln in Kabelschutzrohre der eingangs genannten Art zu schaffen, mit der aufgrund verringerter Reibung zwischen dem Zwischenboden und der Kabelschutzrohrinnenwandung bzw. dem in Kabelschutzrohr liegenden Kabel der Zwischenboden über eine längere Einschubstrecke hinweg in einfacherer und kontinuierlicher Weise eingeschoben werden kann.

Diese Aufgabe wird bei einer Vorrichtung zum nachträglichen Einziehen von Kabeln in Kabelschutzrohre der eingangs genannten Art durch die im Kennzeichen des Anspruchs 1 angegebenen Merkmale gelöst.

Durch das Vorsehen von rippenartigen Verdickungen ist die Längssteifigkeit des Zwischenbodens derart erhöht, daß das vorgenannte buckelartige Aufhocken des Zwischenbodens dann, wenn die Reibung zwischen dem Zwischenboden und dem Kabelschutzrohr bzw. dem innliegenden Kabel zu hoch wird, vermieden ist, so daß auch die ansonsten dadurch bedingte zusätzliche Reibung durch zusätzliche Berührungsflächen zwischen dem Zwischenboden und dem Kabelschutzrohr vermieden ist. Desweiteren sind die Berührungsflächen zwischen dem Zwischenboden und dem im Kabelschutzrohr irgendwie wellenartig liegenden Kabel auf diese Weise auf ein Minimum reduziert, so daß auch hierdurch die Reibung, die beim Einschieben des Zwischenbodens überwunden werden muß, verringert ist. Auch die Fettzugabe zur Reibungsverminderung zwischen dem Zwischenboden und dem bereits liegenden Kabel kann dadurch auf schmale Bereiche reduziert werden. In dieser Hinsicht ergeben sich dadurch auch Vorteile beim Einziehen eines zusätzlichen Kabels über den Zwischenboden nach dessen Einschieben hinweg.

Mit den Merkmalen des Anspruchs 2 ist eine zu einer Quermittelebene symmetrische Anordnung gegeben, die den Vorteil hat, daß der Zwischenboden in beliebiger Lage eingeschoben werden kann.

Mit den Merkmalen des Anspruches 3, die dann vorgesehen werden, wenn die beiden hohlen wulstförmigen Längsränder relativ nahe nebeneinander liegen, ist erreicht, daß sich das im Kabelschutzrohr bereits liegende Kabel dann, wenn es einen relativ großen Durchmesser besitzt, nicht zwischen die beiden hohlen wulstförmigen Längsränder klemmen kann, so daß eine mögliche Reibungserhöhung auf diese Weise vermieden ist. Das gleiche gilt für das auf dem Zwischenboden nachträglich einzuziehende Kabel.

In vielen Fällen wird es zweckmäßig sein, bei einer Vorrichtung der genannten Art die im Anspruch 4 definierten Merkmale vorzusehen, nämlich dann, wenn der Mittenbereich relativ breit ist.

Für im Kabelschutzrohr bereits liegende Kabel relativ kleinen Durchmessers und/oder für einzuziehende Kabel relativ kleinen Durchmessers kann es zweckmäßig sein, wenn die Merkmale gemäß Anspruch 5 vorgesehen sind. Auch bei einem extrem breiten Mittenbereich ist dies vorteilhaft.

Gemäß Anspruch 6 ist die Höhe der rippenartigen Verdickungen mit mindestens etwa gleich der Dicke des Mittenbereichs, wobei jedoch bevorzugt ist, daß die Höhe etwa 2 bis 3 mm beträgt, wenn der Mittenbereich eine Dicke von etwa 1,5 mm aufweist.

Die Querschnittsform der rippenartigen Verdickungen kann entsprechend den Merkmalen des Anpsruchs 7 gewählt sein. Es ist aber auch möglich, mit einer Abflachung versehene, im Querschnitt dreieckförmige rippenartige Verdickungen vorzusehen.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigt:

Figur 1    in teilweise aufgebrochener Seitenansicht eine Vorrichtung zum nachträglichen Verlegen von Kabeln in ein Kabelschutzrohr gemäß einem ersten Ausführungsbeispiel vorliegender Erfindung,

Figur 2 eine Draufsicht auf die erfindungsgemäße Vorrichtung gemäß Pfeil II der Figur 1, in teilweise geschnittener Darstellung,

Figur 3 einen Schnitt längs der Linie III-III der Figur 1,

Figur 4 einen Schnitt ähnlich dem der Figur 3, jedoch gemäß einem zweiten Ausführungsbeispiel vorliegender Erfindung und

Figur 5 einen Schnitt ähnlich dem der Figur 3, jedoch gemäß einem dritten Ausführungsbeispiel vorliegender Erfindung.

Die erfindungsgemäße Vorrichtung 11 dient zum Vorbereiten des nachträglichen Einziehens bzw. zum nachträglichen Einziehen bzw. Verlegen eines oder mehrerer weiterer elektrischer und/oder optischer Kabel 15, 13, in ein Kabelschutzrohr 14 aus Kunststoff oder Tonrohren oder anderem Material, welches im Erdboden verlegt ist und bereits ein elektrisches Kabel 16 aufnimmt, das bodenseitig im Schutzrohr 14 liegt. Das üblicherweise aus mehreren Abschnitten zusammengesetzte Schutzrohr 14 verläuft zwischen zwei Einstiegsschächten, wird üblicherweise bei der Verlegung von bspw. Telefonkabeln aber auch von Energiekabeln verwendet und ist hinsichtlich seines Durchmessers wesentlich größer als das Kabel 16 selbst, so daß noch genügend Platz innerhalb des Schutzrohres 14 zum Verlegen bzw. Einziehen weiterer Kabel vorhanden wäre. Die Vorrichtung 11 verwendet hierzu einen Zwischenboden 12, der in das bereits verlegte Kabelschutzrohr 14 nachträglich durch Einschieben eingezogen wird und auf den eines oder mehrere weitere Kabel 15, plaziert werden können. Der Zwischenboden 12 weist zu beiden Seiten seines Mittenbereichs 17, d.h. an seinen beiden Längsrändern je einen Wulst 18 bzw. 19 auf, der über seine gesamte Länge einen im Querschnitt kreisförmigen Hohlraum 21 aufweist, in welchen je mindestens ein weiteres vorzugsweise optisches Kabel 13, eingezogen bzw. verlegt werden kann.

Der Zwischenboden 12, der zur räumlichen und ggf. auch zur elektrischen Trennung des bereits verlegten Kabels 16 einerseits und des oder der nachträglich verlegten Kabel 15, 13, andererseits dient, ist bspw. aus einem in Querrichtung biegesteifem Kunststoff, wie Polyamid, Polyester, Hart-PVC oder dgl. hergestellt.

Der Zwischenboden 12 ist einstückig, bspw. extrudiert und besitzt, wie oben erwähnt, einen bandförmigen Mittenbereich 17, an dessen beiden Längsränder sich jeweils der Wulst 18 bzw. 19 anschließt, der über seine Gesamtlänge den im Querschnitt kreisförmigen Hohlraum 21 aufweist. Trotz der in Querrichtung verwindungssteifen Ausbildung des Zwischenbodens 12 ist dieser in Längsrichtung vorzugsweise derart flexibel ausgebildet, daß er aufwickelbar ist, also von einer Trommel abgezogen werden kann, so daß er nach Abschluß des Einschiebens in ein Kabelschutzrohr 14 entsprechend abgeschnitten werden kann.

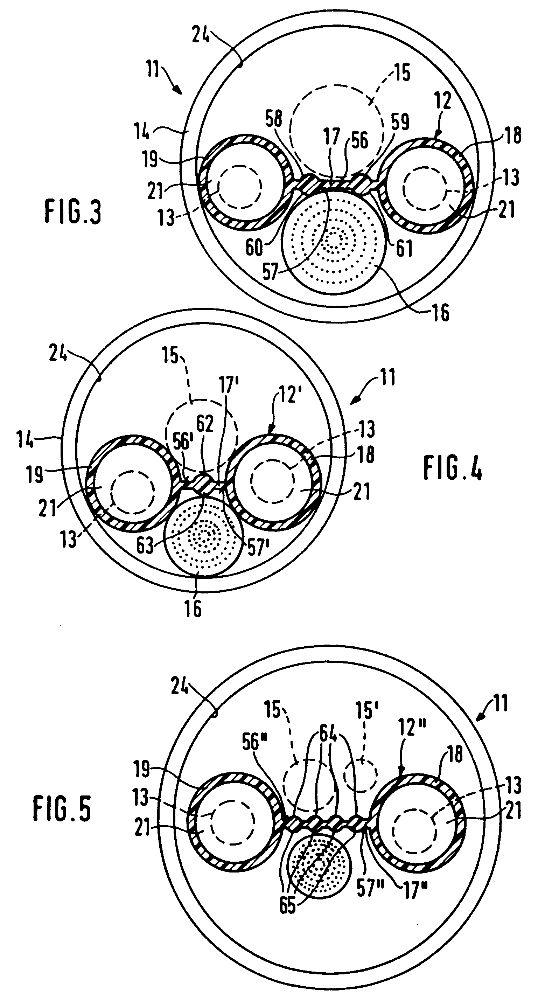

Der bandförmige Mittenbereich 17 besitzt gemäß Figur 3 sowohl an seiner Oberseite 56 als auch an seiner Unterseite 57 über die gesamte Längserstreckung zwei parallel zueinander verlaufende rippenartige Verdickungen 58, 59 bzw. 60, 61. Dabei ist der Abstand der parallelen rippenartigen Verdickungen 58, 60 und 59, 61 größer als deren jeweiliger Abstand zum entsprechenden Wulst 18 bzw. 19. Die rippenartigen Verdickungen 58 und 60 bzw. 59 und 61 sind jeweils unmittelbar einander gegenüberliegend angeordnet und mit dem Mittenbereich 17 bzw. dem gesamten Zwischenboden 12 einstückig geformt bzw. extrudiert. Die rippenartigen Verdickungen 58 bis 61 besitzen beim dargestellten Ausführungsbeispiel eine Halbkreisform, wobei sich versteht, daß sie auch andere Formen besitzen können, b spw. eine im Querschnitt dreieckige Form mit abgeflachtem Scheitel. Die Dicke der rippenartigen Verdickungen 58 bis 61 liegt in einem Bereich zwischen der einfachen und der doppelten Wanddicke des Mittenbereichs 17.

Figur 4 zeigt gemäß einem anderen Ausführungsbeispiel vorliegender Erfindung, daß der Mittenbereich 17' des Zwischenbodens 12' an seiner Oberseite 56' und an seiner Unterseite 57' quermittig jeweils eine einzige rippenartige Verdickung 62' bzw. 63' aufweist. Dies ist vorteilhaft dort, wo der Mittenbereich 17' relativ schmal ist, also die beiden Wulste 18 und 19 relativ zum Ausführungsbeispiel der Figur 3 enger beieinander liegen.

Figur 5 zeigt ein Ausführungsbeispiel bei einem Zwischenboden 12", dessen Mittenbereich 17" relativ breit ist und mit einer Vielzahl von rippenartigen Verdickungen 64 und 65 versehen ist, die paarweise aneinander gegenüber liegen und in geringem seitlichen Abstand aufeinanderfolgen.

Wie in den Figuren gezeigt ist, ist die äußere Breite des Zwischenbodens 12, 12' bzw. 12" höchstens gleich dem, im allgemeinen jedoch geringer als der Innendurchmesser des verlegten Kabelschutzrohres 14, so daß die hohlen wulstförmigen Längsränder 18, 19 gleichzeitig die Höhenführung für den Zwischenboden 12, 12' bzw. 12" während des Einschiebens in das Schutzrohr 14 bilden. Damit ist auch gewährleistet, daß sich der Zwischenboden 12, 12', 12" innerhalb des Kabelschutzrohres 14 in Höhenlage verändern kann, je nachdem, wo das bereits verlegte Kabel 16 liegt. Gemäß den Figuren 3 bis 5 liegt der Zwischenboden 12, 12′, 12″ mit seinen Längsrändern 18, 19 auf der Innenwandung des Kabelschutzrohres 14 unterhalb oder oberhalb von dessen Längsmittelebene und/oder dem Kabel 16, das im Kabelschutzrohr 14 bereits verlegt worden ist, auf.

Der Innendurchmesser der hohlen Wulste bzw. hohlen wulstförmigen Längsränder 18, 19, die vorzugsweise durchmessergleich sind, ist groß genug, um mindestens ein weiteres Kabel bspw. in Form eines relativ dünnen optischen Kabels 13 aufzunehmen. Ein derartiges optisches bzw. Glasfaserkabel 13, kann entweder bereits in den einzuschiebenden Zwischenboden 12, 12′ bzw. 12″ verlegt sein oder mittels eines eingelegten Zugdrahtes nachträglich eingezogen werden.

Die erfindungsgemäße Vorrichtung 11 besitzt außer dem mit seiner Höhenführung in Form der Wulste 18, 19 versehenen Zwischenboden 12, 12′, 12″ eine Kabelführung 25, die dazu dient, daß beim Einschieben des Zwischenbodens 12 dieser und das bereits verlegte Kabel 16 aneinander vorbeikommen, derart, daß entweder das Kabel 16 nach unten gedrückt oder der Zwischenboden 12 ausweichend schräggestellt und/oder nach oben gedrückt wird und daß dabei das bereits verlegte Kabel 16 nicht verletzt wird. Die Kabelführung 25 aus vorzugsweise Kunststoff besteht hier aus drei Teilen, nämlich je einem in jeden hohlen Wulst 18, 19 einsteckbaren Kopfelement 26, 27 und einem über den Mittenbereich 17 des Zwischenbodens 12 schiebbaren Führungselement 28. Die beiden einendig geschlossenen, hohlen Kopfelemente 26 und 27, die gleich ausgebildet sind, besitzen jeweils zwei Bereiche, nämlich einen hinteren, außen zylindrischen Bereich 31 und einen einstückig daran anschließenden außenseitig konischen Bereich 32, dessen kleinster Durchmesser das vordere geschlossene und abgerundete Ende 33 bildet. Der Außendurchmesser des zylindrischen Bereichs 31 entspricht dem Innendurchmesser des Wulstes 18, 19, so daß er in diesen eingesteckt werden kann. Der vordere konische Bereich 32 schließt sich über eine Ringschulter 38 an den hinteren Bereich 31 an. Die Breite der Ringschulter 38 entspricht der Wanddicke des Wulstes 18, 19.

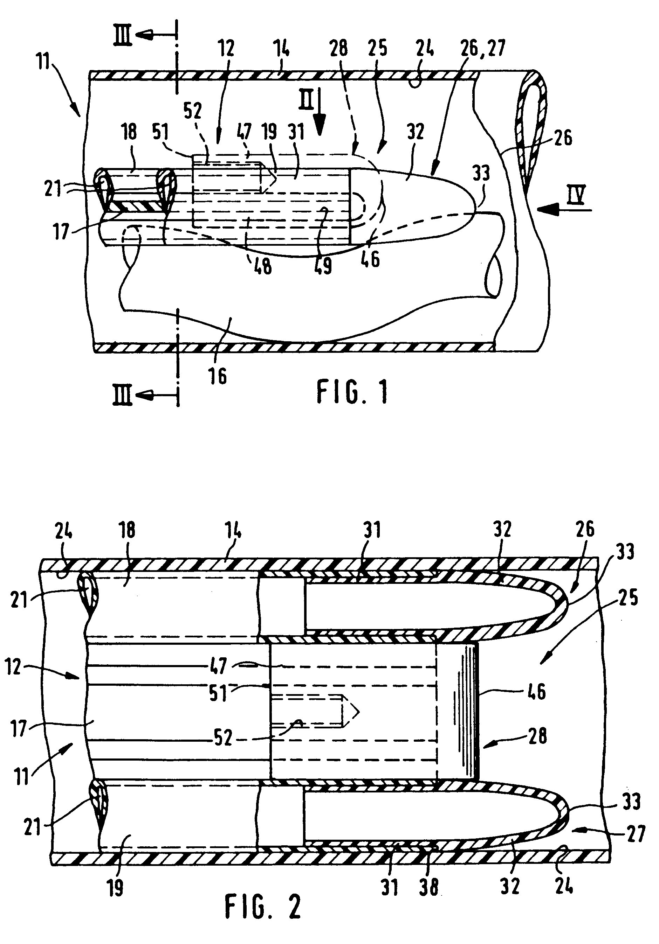

Das Führungselement 28, das ebenfalls aus Kunststoff hergestellt ist, besitzt die Form eines liegenden U, ist also am vorderen freien Ende 46 gerundet und besitzt eine dem Mittenbereich 17 des Zwischenbodens 12 entsprechende Breite. Der durch die beiden Schenkel 47 und 48 des U gebildeten Schlitzes 49 besitzt eine lichte Weite, die gleich oder etwas kleiner ist als die Dicke des Mittenbereichs 17 einschl. dessen rippenartigen Verdickungen 58 bis 65. Es ist auch möglich, daß der Schlitz 49 grundsätzlich eine lichte Weite entsprechend der Dicke des Mittenbereichs 17 ohne Verdickungen aufweist und daß in die beiden Schenkel 47 und 48 Nuten zur Aufnahme der betreffenden rippenartigen Verdickungen 58 bis 65 vorgesehen sind. Damit kann der Mittenbereich 17 des Zwischenbodens 12 reibschlüssig im Schlitz 49 aufgenommen werden. Der in Einbaulage gemäß Figur 1 obere Schenkel 47 ist dicker ausgebildet als der untere Schenkel 48 und ist an seinem in Einschubrichtung des Zwischenbodens 12 hinteren Ende 51 mit einer Gewindesacklochbohrung 52 versehen, in die in nicht dargestellter Weise ein entsprechendes Gewindelement eingeschraubt werden kann, das bspw. an einem Zugseil oder dgl. befestigt ist, so daß dieses Zugseil mit dem Zwischenboden 12 gleichzeitig mit in das Schutzrohr 14 eingezogen werden kann.

Das nachträgliche Einschieben des Zwischenbodens in ein im Erdboden verlegtes Kabelschutzrohr 14, das mit einem Kabel 16 belegt ist, erfolgt dadurch, daß der am vorderen Ende mit der Kabelführung 25 versehene Zwischenboden 12, 12′ bzw. 12″ mit Hilfe einer nicht dargestellten Antriebsvorrichtung oder bei kurzen Strecken von Hand eingeschoben wird, wobei die Kabelführung 25 an der Schutzrohrinnenwandung 24 entlang und über das bereits verlegte Kabel 16 gleitet und das letztere dabei ggf. auf die eine oder andere Seite in Richtung des Schutzrohrbodens drückt oder selbst durch Sichschräglegen ausweicht. Entsprechend bewegt sich der Zwischenboden 12, 12′, 12″ innerhalb des Schutzrohres 14, d.h. er gleitet an der Schutzrohrinnenwandung 24 entlang und verwindet sich entsprechend der sich ändernden Lage der Kabelführung 25. Dabei spielt es keine Rolle, ob die Kabelführung 25 bzw. der Zwischenboden 12, wie in der Zeichnung dargestellt ist, genau horizontal oder nach der einen oder anderen Richtung schräg verlaufend also geneigt innerhalb des Schutzrohres 14 angeordnet ist, denn in diesem Zusammenhang umfaßt der Begriff "Zwischenboden" auch den Begriff "Zwischenwand" wenn sich im Extremfall die Kabelführung 25 und/bzw. der Zwischenboden 12 schräg oder senkrecht stellt. Diese Lage wird, da der Zwischenboden 12 verwindbar ist, von der Lage des bereits verlegten Kabels 16 im Schutzrohr 14 bestimmt. Durch die Anordnung der rippenartigen Verdickungen 58 bis 65 ist außerdem eine gewisse Eigensteifigkeit in Längsrichtung gegeben, so daß sich dann, wenn die Reibung relativ groß wird, der Zwischenboden 12, 12′, 12″ im Kabelschutzrohr 14 nicht aufstellt.

## Patentansprüche

1. Vorrichtung zum nachträglichen Einziehen von Kabeln in Kabelschutzrohre, die bereits mit mindestens einem Kabel bestückt sind, mit einem in das Schutzrohr (14) einschiebbaren Zwischenboden (12), der zu beiden Seiten seines Mittenbereichs (17) mit einem hohlen wulstförmigen Längsrand (18,19) als Höhenführung versehen ist, **dadurch gekennzeichnet**, daß der Mittenbereich (17) des Zwischenbodens (12) an seiner oberen und/oder unteren Fläche (56,57) mit mindestens einer in Längsrichtung des Zwischenbodens (12) verlaufenden rippenartigen Verdickung (58 bis 65) einstückig versehen ist.

2. Vorrichtung nach Anspruch 1, dadurch gekennzeichnet, daß die rippenartige Verdickung (58 bis 65) an der oberen Fläche (56) und diejenigen an der unteren Fläche (57) des Mittenbereichs (17) des Zwischenbodens (12) nach Art eines Paares unmittelbar einander gegenüberliegend angeordnet sind.

3. Vorrichtung nach Anspruch 2, dadurch gekennzeichnet, daß ein Paar rippenartiger Verdickungen (62, 63) quermittig am Mittenbereich (17′) des Zwischenbodens (12′) angeordnet ist.

4. Vorrichtung nach Anspruch 2, dadurch gekennzeichnet, daß zwei parallele Paare rippenartiger Verdickungen (58 bis 61), deren Abstand voneinander größer ist als ihr jeweiliger Abstand vom betreffenden hohlen wulstförmigen Wulstrand (18,19) am Mittenbereich (17) des Zwischenbodens (12) angeordnet sind.

5. Vorrichtung nach Anspruch 2, dadurch gekennzeichnet, daß eine Vielzahl von Paaren rippenartiger Verdickungen (64,65) über die Breite des Mittenbereichs (17″) des Zwischenbodens (12″) gleichmäßig verteilt angeordnet sind.

6. Vorrichtung nach einem der vorhergehenden Ansprüche, dadurch gekennzeichnet, daß die rippenartigen Verdickungen (64,65) eine Höhe aufweisen, die mindestens gleich der Dicke des Mittenbereichs (17″) des Zwischenbodens (12″) ist.

7. Vorrichtung nach einem der vorhergehenden Ansprüche, dadurch gekennzeichnet, daß die rippenartige Verdickung (58 bis 65) im Querschnitt etwa halbkreisförmig ist.

### Claims

1. A device for retrospectively drawing cables into cable protection pipes which are already provided with at least one cable, including a partition floor (12) which may be pulled into the protection pipe (14) and which is provided on both sides of its central region (17) with a hollow tubular longitudinal edge (18,19) which determines its level, characterized in that the central region (17) of the partition floor (12) is provided at its upper and/or lower surfaces (56,57) with at least one reinforcing rib (58 to 65) extending in the longitudinal direction of the partition floor (12).

2. A device according to Claim 1, characterized in that the reinforcing ribs (58 to 65) provided on the upper surface (56) and on the lower surface (57) of the central region (17) of the partition floor (12) are arranged in pairs lying directly opposite one another.

3. A device according to Claim 2, characterized in that a pair of reinforcing ribs (62,63) are arranged centrally in the central region (17') of the partition floor (12').

4. A device according to Claim 2, characterized in that two parallel pairs of reinforcing ribs (58 to 61) are arranged on the central region (17) of the partition floor (12) with a gap between the pairs greater than the gap between each pair and the corresponding hollow tubular shaped tube edge (18,19).

5. A device according to Claim 2, characterized in that a large number of pairs of reinforcing ribs (64,65) are distributed evenly over the width of the central region (17″) of the partition floor (12″).

6. A device according to any one of the preceding claims, characterized in that the reinforcing ribs (64,65) are of a height which is at least equal to the thickness of the central region (17″) of the partition floor (12″).

7. A device according to any one of the preceding claims, characterized in that the reinforcing ribs (58 to 65) are approximately semicircular in cross section.

### Revendications

1. Dispositif pour le tirage ultérieur de câbles dans des tuyaux de protection qui contiennent déjà au moins un câble, comportant un fond intermédiaire (12) pouvant être inséré dans le tuyau (14) et présent des deux côtés de sa zone centrale (17) un bord longitudinal, creux, formant bourrelet (18, 19), servant de guidage en hauteur, caractérisé par le fait que ladite zone centrale (17) du fond intermédiaire (12) est munie sur sa face supérieure et/ou inférieure (56, 57) d'au moins une surépaisseur (58 à 65) du type nervure s'étendant en direction longitudinale dudit fond intermédiaire dont elle fait partie intégrante.

2.   Dispositif selon la revendication 1, caractérisé par le fait que la surépaisseur du type nervure (58 à 65) sur la face supérieure (56) et celle sur la face inférieure (57) de la zone centrale (17) du fond intermédiaire (12) sont disposées directement face-à-face, de manière à constituer une paire.

3.   Dispositif selon la revendication 2, caractérisé par le fait qu'une paire de surépaisseurs du type nervures (62, 63) est disposée transversalement au milieu de la zone centrale (17') du fond intermédiaire (12').

4.   Dispositif selon la revendication 2, caractérisé par le fait que dans la zone centrale (17) du fond intermédiaire (12) sont disposées deux paires parallèles de surépaisseurs du type nervures (58 à 61) dont la distance mutuelle est supérieure à la distance entre chacune d'elles et le bord creux, en forme de bourrelet (18, 19), respectif.

5.   Dispositif selon la revendication 2, caractérisé par le fait qu'une pluralité de paires de surépaisseurs du type nervures (64, 65) sont régulièrement réparties sur la largeur de la zone centrale (17") du fond intermédiaire (12").

6.   Dispositif selon l'une des revendications prcédentes, caractérisé par le fait que les surépaisseurs du type nervures (64, 65) ont une hauteur qui est au moins égale à l'épaisseur de la zone centrale (17") du fond intermédiaire (12").

7.   Dispositif selon l'une des revendications précédentes, caractérisé par le fait que la surépaisseur du type nervure (58 à 65) a une section transversale de forme sensiblement semi-circulaire.

FIG. 1

FIG. 2

FIG.3

FIG.4

FIG.5